# NEW EUROPEAN PATENT SPECIFICATION

(11) **EP 0 224 307 B2**
(45) Date of publication and mention of the opposition decision: **21.02.1996**
(45) Mention of the grant of the patent: 18.10.1989
(21) Application number: 86202047.6
(22) Date of filing: 19.11.1986
(51) Int. Cl.: A01J 25/13

(54) **Cheese vat comprising a removable inner mould provided with a deformable retaining ring, and a cheese vat inner mould**
Käseform mit einer entfernbaren Innenform mit einem verformbaren Haltering sowie eine Innenform für eine Käseform
Moule à fromage avec un moule intérieur enlevable garni d'un anneau de maintien déformable et moule intérieur à fromage

(30) Priority: 22.11.1985 NL 8503231
(43) Date of publication of application: 03.06.1987
(73) Proprietor: CRELLIN B.V., NL-3067 GR Rotterdam (NL)
(72) Inventor: Van der Ploeg, Dirk Cornelis Hendrik, NL-3261 VH Oud-Beijerland (NL); Tameris, Hendrikus Matheus, NL-3082 JC Rotterdam (NL)
(74) Representative: van der Veken, Johannes Adriaan

(56) References cited:
- DE-B- 1 140 012
- DE-B- 1 194 625
- FR-A- 2 539 271

## Description

The invention relates to a cheese vat of plastics material according to the introductory part of claim 1.

A cheese vat of this type, of plastics material and provided with a removable inner mould disposed in the cheese vat and being in the form of a gauze or fabric connected to an upper edge, which extends around same and cooperates with the upper surface of an outwardly projecting rim of the cheese vat is known from DE-B-1.140.012.

A cheese vat of this type being provided with a removable inner mould, provides the great advantage that the production of cheese can be automated.

This known embodiment however, has the disadvantage that due to a non tight cooperation between the projecting rim and the inner mould upper edge, there is a risk of accumulation of curd or whey residues between said rim and the inner mould upper edge. As nowadays the combination of cheese vat with inner mould has to be cleaned without disassembling same these residues might give rise to deterioration and this may even impair the quality of the cheese manufactured by means of such a mould.

This holds the more as the inner mould upper edge may be easily deformed as a part of this inner mould upper edge projects outside the circumference of the projecting rim. The projecting part of the inner mould upper edge may also be easily damaged thus providing additional areas to which residues may stick and which are difficult to remove.

Moreover, the inner mould can be pulled out of the cheese mould at the wrong time.

It is now the aim of the invention to provide a cheese vat of the above-mentioned type in which the cheese vat and its inner mould can be joined together very easily, in which a very good connection between the cheese vat and the inner mould is ensured, while on the other hand the inner mould can easily be replaced in the event of damage.

This aim is achieved according to the invention according to the characterizing clause of claim 1.

Through the use of the clamping ring which snap fit cooperate with the inner wall of the cheese vat, the upper part of the inner mould can easily be attached to the cheese vat in such a manner that the inner mould cannot be pulled out of the cheese vat at the wrong time and the fastening parts need no longer to project out of the cheese vat, but on the other hand due to the deformability of the fastening parts of the inner mould it is also possible for a cheese vat inner mould to be easily replaced by another inner mould.

It will obviously be clear that through the use of the fastening means described the inner mould can remain continuously attached to the cheese vat during the production of the cheese, since the cheese can be removed from a cheese vat of this type without removing the inner mould, so that practically automatic production is possible.

It should be noted that it was known in the art to retain an inner mould in a cheese vat by means of a clamping ring extending around the inner mould, which snap fit cooperates with a circumferential groove in the inner wall of the cheese vat.

However, in this combination the inner mould has no projecting upper edge.

By means of a clamping ring of this kind, which extends around the mould and is snap fit received in a groove extending around the cheese vat, optimum fastening of the inner mould to the cheese vat is achieved, but it is nevertheless still possible to remove the inner mould.

In one particularly advantageous embodiment the clamping ring is disposed on the outer side of an upper part of the inner mould, this upper part being received in a circumferential chamber extending around the inner wall of the cheese vat. Accurate adaptation of the shape of this chamber to the outer side of the upper portion of the mould received in said chamber enables very good cooperation to be achieved and prevents the deposition of difficultly removable products between the outer side of said upper portion and the interior of said chamber.

The upper part of the inner mould preferably merges via a conically widened transition portion into an upper edge, advantageously received in a matching recess in the top edge of the cheese vat. If the top face of the upper edge of the cheese vat and the upper face of the upper edge of the inner mould extend in the same plane, a very easily handled assembly comprising the cheese vat and the inner mould is obtained. The conically widened transition portion of the inner mould and the matching conical shape of the inner wall of the cheese vat facing said transition portion ensure optimum connection of the mutually cooperating walls, so that no residues of curds can accumulate in that region.

Through the provision of the conical widening at the top of the assembly, it is also very easy to introduce into the cheese vat a follower for compressing curds in the cheese vat.

The invention will now be illustrated by means of an embodiment with reference to the drawing, in which:

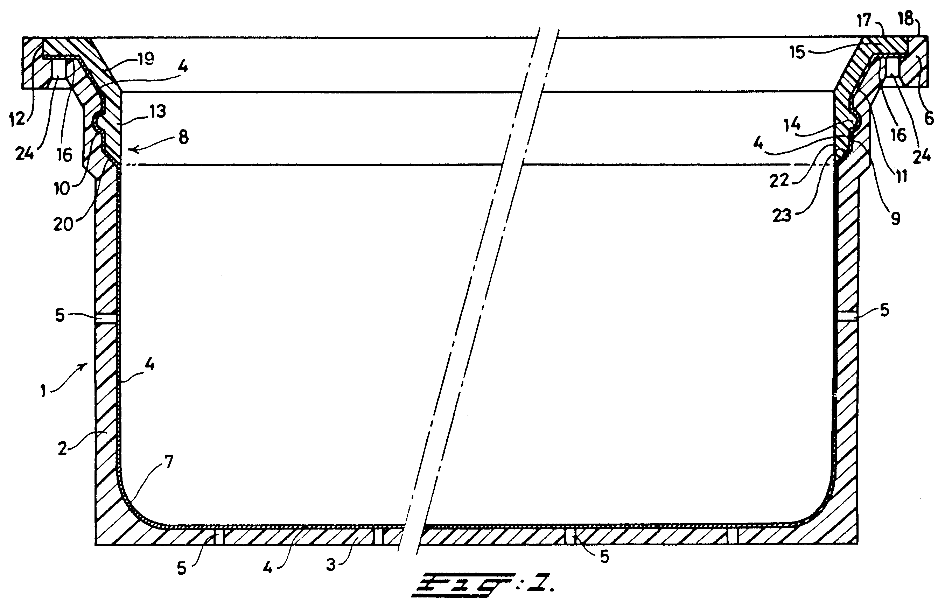

Figure 1 shows a cross-section of a cheese vat according to the invention.

Figure 1 shows a cheese vat 1 of plastics material, which is made particularly of a polyolefin, more particularly polypropylene.

This cheese vat comprises a bottom 3 and an upright cylindrical wall 2, both being provided with outlet openings 5 for whey.

Inside the cheese vat 1 is disposed a moisture permeable removable inner mould 4, being produced by shaping a polypropylene gauze.

In order to be able to produce round cheeses of high weight in a cheese vat 1 of this kind, it is recommended for the bottom portion 7 of the upright wall 2 to be rounded towards the bottom.

At its top the inner mould 4 is fixed to fastening means comprising an upper part 13, which merges via a conically widened transition portion 19 into an upper edge 15. This upper edge 15 of the inner mould is received in a matching recess 12 in the upper edge 6 of the cheese vat. The upper face 18 of the upper edge 6 of the cheese vat and the upper face 17 of the upper edge 15 of the inner mould lie in the same plane, so that the assembly comprising the cheese vat 1 and the inner mould 4 has no projecting parts.

The upper edge 15 of the inner mould lies with its bottom face against the bottom face 16 of the recess 12 in the upper edge of the cheese vat, while the inner face of the conically widened transition portion 19 of the inner mould also lies against the conical wall 11 of the cheese vat.

In the cylindrical recess 8 extends a circumferential groove 10, in which the annular projection 14 on the outer side of the upper part 13 of the inner mould 4 snap fits.

The free surface 22 of the upper part 13 extends substantially in the same plane as the inner surface of the upright wall 2 of the cheese vat.

The bottom 20 of the annular chamber 8 is expediently bevelled; the same applies to the face 23 of the upper part 13 cooperating therewith.

The upright wall 9 of the chamber 8 likewise joints with a good fit the facing surface of the upper part 13.

Although the chamber 8 can be formed directly in the upright wall 2, it is advisable to form this chamber 8 by increasing the diameter of the inner side of the cheese vat 1 in the region where the chamber 8 is to be formed, thereby simultaneously forming the bevelled bottom 20 of this chamber 8.

It will be clear that through the use of the annular projection 14, which may also be called the ring 14 and which snap fits into the groove 10 in the inner wall of the cheese vat 1, a very good fastening is ensured between the cheese vat and the inner mould, and the inner mould can be removed at any time. Since the surfaces 18 and 17 lie in the same plane, moreover, no part of the inner mould 4 projects from the cheese vat 1, so that the risk of inadvertent detachment of the inner mould 4 from the cheese vat 1 is prevented.

The upper part 13, the widened transition part 19 and the upper edge 15 of the inner mould are also preferably made of a plastics material, particularly a polyolefin, more particularly polypropylene.

In order to simplify the replacement of an inner mould 4, it is recommended to provide one or more bores 24 in the upper edge 6 of the cheese vat, in the region of the recess 12, so that by means of a tool pressure can be applied against the upper edge 15 of the inner mould, in order to push the inner mould 4 outwardly and to remove same from the cheese vat.

## Claims

1. Cheese vat (1) of plastics material having an outwardly projecting rim (6) provided with a removable moisture permeable inner mould (4) of plastics material comprising inner mould retaining means in the form of an inner mould upper edge (15) lying with its bottom face against an upper surface of said projecting rim (6) in the region outside the circumference of the cheese vat, characterized in that the inner mould retaining means also comprise a clamping ring (14) extending around the mould snap fit cooperating with a circumferential groove (10) extending in the inner wall of the cheese vat (1) and the outer circumference of the inner mould upper edge (15) does not project beyond the outer circumference of the projecting rim (6).

2. Cheese vat according to claim 1, characterized in that the clamping ring (14) is disposed on the outer side of the upper part (13) of the inner mould (4), this upper part (13) being received in a circumferential chamber (8) in the inner wall of the cheese vat (1).

3. Cheese vat according to one or more of the preceding claims, characterized in that the upper part (13) of the inner mould (4) merges via a conically widened transition portion (19) into an upper edge (15) of the inner mould.

4. Cheese vat according to one or more of the preceding claims, characterized in that the upper edge (15) of the inner mould (4) is received in a matching recess (12) in the upper edge (6) of the cheese vat and preferably the upper face (18) of the upper edge (6) of the cheese vat and the upper face of the upper edge (15) of the inner mould extend in the same plane.

5. Cheese vat according to one or more of the preceding claims, characterized in that the bottom (20) of the chamber (8) is bevelled and extends under an obtuse angle with respect of the inner wall of said chamber at its inner side and cooperates with a matching bottom face of the upper part (13).

6. Cheese vat according to one or more of the preceding claims, characterized in that the inner wall (9) of the chamber (8) widens conically from its bottom towards the top of the cheese vat (1).

7. Cheese vat according to one or more of the preceding claims, characterized in that the end wall (23') of the recess (12) in the upper edge (6) of the cheese vat extends conically from the bottom of said recess (12).

8. Cheese vat according to one or more of the preceding claims, characterized in that the upper edge (6) of the cheese vat is provided with one or more bores (24) lying opposite the upper edge (15) of the inner mould.

## Patentansprüche

1. Käseform (1) aus Kunststoff mit einem nach außen vorstehenden Rand (6) mit einer entfernbaren, feuchtigkeitsdurchlässigen Innenform (4) aus Kunststoff und die Innenform haltenden Mitteln, bestehend aus einer oberen Kante (15) der Innenform, die mit ihrer Bodenseite gegen eine Oberseite des vorspringenden Randes (6) im Bereich außerhalb des Umfanges der Käseform anliegt, dadurch gekennzeichnet, daß die die Innenform haltenden Mittel weiterhin einen Klemmring (14) aufweisen, der sich um die Form erstreckt und mit einer umfangsmäßigen Nut (10) zusammenwirkt, die in der inneren Wand der Käseform (1) vorgesehen ist, wobei der äußere Umfang der oberen Kante (15) der Innenform nicht über den äußeren Umfang des vorspringenden Randes (6) vorsteht.

2. Käseform nach Anspruch 1, dadurch gekennzeichnet, daß der Klemmring (14) an der äußeren Seite des oberen Teiles (13) der Innenform (4) angeordnet ist, wobei dieses obere Teil (13) in einer sich umfangsmäßig erstreckenden Kammer (8) in der inneren Wand der Käseform aufgenommen ist.

3. Käseform nach einem oder mehreren der vorhergehenden Ansprüche, dadurch gekennzeichnet, daß das obere Teil (13) der Innenform (4) sich an seiner inneren Seite über ein konisch erweiterndes Übergangsteil (19) zu einer oberen Kante (15) der Innenform erweitert.

4. Käseform nach einem oder mehreren der vorhergehennehmung (12) in der oberen Kante (6) der Käseform aufgenommen wird, wobei vorzugsweise die obere Fläche (18) der oberen Kante (6) der Käseform und der oberen Fläche der oberen Kante (15) der Innenform sich in derselben Ebene erstrecken.

5. Käseform nach einem oder mehreren der vorhergehenden Ansprüche, dadurch gekennzeichnet, daß der Boden (20) der Kammer (8) abgeschrägt ist und sich unter einem stumpfen Winkel gegenüber der inneren Wand der Kammer erstreckt und mit einer angepaßten Bodenfläche des oberen Teiles (13) zusammenwirkt.

6. Käseform nach einem oder mehreren der vorhergehenden Ansprüche, dadurch gekennzeichnet, daß die innere Wand (9) der Kammer (8) sich konisch vom Boden zur Oberseite der Käseform (1) hin erweitert.

7. Käseform nach einem oder mehreren der vorhergehenden Ansprüche, dadurch gekennzeichnet, daß die Endwandung (23') der Ausnehmung (12) in der oberen Kante (6) der Käseform sich konisch vom Boden der Ausnehmung (12) aus erstreckt.

8. Käseform nach einem oder mehreren der vorhergehenden Ansprüche, dadurch gekennzeichnet, daß der obere Rand (6) der Käseform mit einer oder mehreren Bohrungen (24) ausgerüstet ist, die gegenüber der oberen Kante der Innenform liegen.

## Revendications

1. Moule à fromage (1) en matière plastique comportant un bord supérieur (6) en saillie vers l'extérieur et muni d'un bac intérieur (4) amovible et perméable à l'humidité, en matériau plastique, et comprenant des moyens de retenue du bac intérieur sous la forme d'un bond supérieur (15) du bac intérieur disposé avec sa face de fond contre une surface supérieure dudit bord en saillie (6) dans la zone extérieure à la circonférence du moule à fromage, caractérisé en ce que les moyens de retenue du bac intérieur comportent également une bague de retenue (14) s'étendant autour du bac en coopérant par ajustement encliqueté avec une rainure circonférencielle (10) s'étendant dans la paroi intérieure du moule à fromage (1) et en ce que la circonférence extérieure du bord supérieur (15) du moule intérieur ne fait pas saillie au-delà de la circonférence extérieure du bord en saillie (6).

2. Moule à fromage suivant la revendication 1, caractérisé en ce que la bague de serrage (14) est disposée sur la face extérieure de la partie supérieure (13) du bac intérieur (4) cette partie supérieure (13) étant reçue dans une chambre circonférencielle (8) aménagée dans la paroi intérieure du moule à fromage (1).

3. Moule à fromage selon une ou plusieurs des revendications précédentes caractérisé en ce que la partie supérieure (13) du bac intérieur (4) se raccorde par l'intermédiaire d'une partie de transition (19) évasée en cône sur sa face intérieure, à un bord supérieur (15) du bac intérieur.

4. Moule à fromage selon une ou plusieurs des revendications précédentes caractérisé en ce que le bord supérieur (15) du bac intérieur (4) s'engage dans un évidement adapté (12), aménagé dans le bord supérieur (6) du moule à fromage, et de préférence la face supérieure (18) du bord supérieur (6) du moule à fromage et la face supérieure du bord supérieur (15) du bac intérieur étant situées dans le même plan.

5. Moule à fromage selon une ou plusieurs des revendications précédentes caractérisé en ce que le fond (20) de la chambre (8) est biseauté et s'étend en formant un angle obtus par rapport à la paroi intérieure de ladite chambre et coopère avec une face de fond adaptée de la partie supérieure (13).

6. Moule à fromage selon une ou plusieurs des revendications précédentes caractérisé en ce que la paroi intérieure (9) de la chambre (8) est évasée en forme de cône depuis sa partie inférieure vers le sommet du moule à fromage (1).

7. Moule à fromage selon une ou plusieurs des revendications précédentes caractérisé en ce que la paroi d'extrémité (23') de l'évidement (12) aménagé dans le bord supérieur (6) du moule à fromage se prolonge en cône depuis le fond dudit évidement (12).

8. Moule à fromage selon une ou plusieurs des revendications précédentes caractérisé en ce que le bord supérieur (6) du moule à fromage comporte un ou plusieurs trous (24) situés en face du bord supérieur (15) du bac intérieur.
